# EUROPÄISCHE PATENTSCHRIFT

(11) **EP 0 804 270 B1**
(45) Veröffentlichungstag und Bekanntmachung des Hinweises auf die Patenterteilung: **06.06.2001**
(21) Anmeldenummer: 96900956.2
(22) Anmeldetag: 15.01.1996
(51) Int. Cl.: B01D 39/08

(54) **MATERIAL ZUR FILTRATION VON VISKOSEN FLÜSSIGKEITEN**
MATERIAL FOR FILTERING VISCOUS LIQUIDS
MATERIAU POUR LA FILTRATION DE LIQUIDES VISQUEUX

(30) Priorität: 18.01.1995 DE 19501297
(43) Veröffentlichungstag der Anmeldung: 05.11.1997
(73) Patentinhaber: BASF Coatings Aktiengesellschaft, 48165 Münster (DE)
(72) Erfinder: HEEREN, Dieter, D-48317 Drensteinfurt (DE); WINZENHÖLER, Edgar, D-97280 Renlingen (DE)
(74) Vertreter: Fitzner, Ulrich, Dr.
(86) Internationale Anmeldenummer: EP9600142
(87) Internationale Veröffentlichungsnummer: WO9622145

(56) Entgegenhaltungen:
- EP-A- 0 564 799
- EP-A- 0 634 200
- WO-A-87/04638
- WO-A-93/11849
- US-A- 5 156 661
- PATENT ABSTRACTS OF JAPAN vol. 18, no. 610 (C-1276), 21.November 1994 & JP,A,06 233907 (KANSAI PAINT CO. LTD.), 23.August 1994, & DATABASE WPI Section Ch, Week 9438 Derwent Publications Ltd., London, GB; Class A04, AN 94-307234 & JP,A,06 233 907 (KANSAI PAINT CO. LTD.) , 23.August 1994 & CHEMICAL ABSTRACTS, vol. 122, no. 8, 20.Februar 1995 Columbus, Ohio, US; abstract no. 83763, H. HAISHI ET AL.: "filtration process and apparatus for aqueous coatings"
- PATENT ABSTRACTS OF JAPAN vol. 16, no. 425 (C-0982), 7.September 1992 & JP,A,04 145914 (DAIWABOU KURIEITO K.K.), 19.Mai 1992, & DATABASE WPI Section Ch, Week 9226 Derwent Publications Ltd., London, GB; Class A12, AN 92-214430 & JP,A,04 145 914 (DAIWABO CREATO K.K.) , 19.Mai 1992

## Beschreibung

Die vorliegende Erfindung betrifft ein neuartiges Material, das zur Filtration von viskosen Flüssigkeiten, insbesondere von Wasserbasislacken einsetzbar ist.

Für die Filtration von Lacken, insbesondere von Wasserbasislacken werden heute verschiedene Filterbeutel eingesetzt. In der Regel ist es notwendig, zunächst eine Schmutzfiltration durchzuführen und im Anschluß hieran eine sogenannte Kraterfiltration. Wasserbasislacke weisen nämlich eine hohe Empfindlichkeit gegen Silikonöle, verschiedene organische kondensierte Polymere usw. (kraterverursachende Substanzen) auf. Bei der Filtration von Wasserbasislacken werden demgemäß sogenannte "Kraterfiltrationsbeutel" heute regelmäßig prophylaktisch eingesetzt.

Die Vorgehensweise bedingt, daß in getrennten Filtergehäusen die Beutel für die Schmutzfiltration und für die "Kraterfiltration" untergebracht werden. Beide werden hintereinander geschaltet, damit zunächst der Lack einer Schmutzfiltration und anschließend einer "Kraterfiltration" unterworfen wird. Regelmäßig wird hierbei das sogenannte Verfahren der Kreisfiltration angewendet. Dabei wird der Lack zur Erzielung einer möglichst großen Verweilzeit im Filterbeutel mehrere Male über die beschriebene Filteranordnung gepumpt, bis dieser schließlich sauber und "kraterfrei" ist.

Nachteilig bei diesem Verfahren ist, daß es sehr zeitraubend ist. Aus diesem Grunde gibt es Verfahren, bei denen die Filterbeutel nicht hintereinander, sondern parallel geschaltet sind. Aber auch bei dieser Vorgehensweise sind die Ergebnisse noch nicht zufriedenstellend. Insbesondere ist der Zeitaufwand immer noch zu hoch.

Weiterhin sind Filter mit einem mehrschichtigen Aufbau bekannt. So beschreibt die JP-A-06233907 ein gewöhnliches Filter, welches mit einer Schicht aus ungewebtem, lipophilem Gewebe beschichtet ist. Das lipophile Gewebe besteht aus Polypropylenfasern mit einer Dicke von weniger als 5 µm, während über die Art des gewöhnliches Filtergewebes nichts ausgesagt ist. Die Anordnung der Schichten in bezug auf die Flußrichtung des Filtrates ist so, daß die gewöhnliche Filterschicht hinter dem ungewebtem, lipophilem Gewebe liegt.

Die WO87/04638 betrifft eine spezielle Filterpatrone zur Filtration von Wasserlack-Overspray für die Rückgewinnung von Rohlack und Lösemittel. Hierbei geht es um die membranartige Separation von Bestandteilen des Oversprays nach ihrer Molekülgröße, wobei sowohl das Filtrat (Lösemittel) als auch das Retentat (rückgewonnener Lack) weiterverwendet werden. Eine Schmutzfiltration findet nicht statt. Das Filtermaterial selbst hat einen komplizierten Aufbau aus einer Gewebeschicht, einer Epoxidschicht und einer Polyurethanschicht.

Schließlich wird in dem WPI Abstract zur JP-A-4145914 eine zylindrische Filterpatrone beschrieben, mit welcher kleine Partikel mit hoher Präzision aus einem Flüssigkeitsstrom, z.B. aus Autolack, herausfiltriert werden können. Der Filter besteht aus zwei Schichten, die insbesondere aus Polypropylen bestehen können. Die in Filtrationsrichtung erste Schicht ist eine ungewebte Schicht mit Fasern größer als 0,5 denier, während die zweite Schicht kleinere Fasern (kleiner als 0,5 denier) und eine höhere Dichte aufweist.

Die vorliegende Erfindung hat sich demgegenüber die Aufgabe gestellt, ein Material zur Filtration von Lacken, insbesondere von Wasserbasislacken, zu entwickeln, welches gleichzeitig eine Schmutzfiltration und eine sogenannte "Kraterfiltration" ermöglicht.

Diese Aufgabe kann überraschenderweise durch ein Material gelöst werden, das aus mindestens zwei Schichten mit unterschiedlicher Filterselektivität zusammengesetzt ist, wobei eine in Flußrichtung des Filtrates gesehen erste Schicht aus Polypropylen und eine in Flußrichtung des Filtrates gesehen zweite Schicht aus Polypropylen vorhanden sind, wobei die erste Schicht eine Nadelfilzund die zweite Schicht eine Mikrofaser-Struktur hat und die Filterfeinheiten (Porengröße) der ersten Schicht und der zweiten Schicht im Verhältnis von 10:1 bis 5:1 zueinander stehen, und wobei die Filterfeinheit der ersten Schicht bis zu 100 µm beträgt.

Von den zwei Schichten des Materials wirkt die erste Schicht als Schmutzfilter und die zweite als Adsorptionsfilter. Gegebenenfalls kann eine dritte Schicht vorgesehen sein, die als Stützgewebe dient.

In Anbetracht des oben genannten Verhältnisses zwischen den Filterfeinheiten beträgt die Filterfeinheit der zweiten Schicht (Adsorptionsfilter) bis zu 20 µm. Bevorzugt werden hier 1 bis 2 µm.

Die erste Schicht besteht aus einem Nadelfilz. Nadelfilze haben im Gegensatz zu Geweben eine höhere Schmutzaufnahmekapazität und ermöglichen eine gewisse Tiefenfiltration. Die Mikrofaser-Struktur besteht dagegen aus noch feineren Fasern. Man erzielt hiermit hohe Ausscheidungsraten von ca. 98%. Die Polypropylen Mikrofasern haben darüber hinaus öladsorbierende Eigenschaften.

Erfindungsgemäß werden die Filterschichten vorzugsweise in Form von Beuteln verwendet. Diese liegen regelmäßig in konventioneller Ausführung mit einem Metallring vor. Hier werden die einzelnen Schichten zu einer Wulst zusammengefügt. Dies kann mit allen üblichen Befestigungsmethoden, z.B. mittels Schweißens geschehen.

Im folgenden wird die Erfindung unter Bezugnahme auf die Figuren näher beschrieben:
Figur 1 zeigt ein Beispiel für die Schichtung des erfindungsgemäßen Filtermaterials. Hierbei ist mit Ziffer 6 die Schmutzfilterschicht, mit Ziffer 7 die Kraterfiltrationsschicht
und mit Ziffer 8 das Stützgewebe gekennzeichnet. Im erfindungsgemäßen Beispiel besteht die Schicht 6 aus Polypropylen-Nadelfilz, die Schicht 7 aus Polypropylen-Mikrofaser und die Schicht 8 aus einem Nylongewebe.

In den Figuren 2 und 3 ist die erfindungsgemäße Handhabung in Form von Beutelfiltem abgebildet. Diese zeichnen sich durch eine besonders einfache Handhabung aus. Über den Verschlußkragen 1 kann eine perfekte Abdichtung des Beutels erreicht werden. Gleichzeitig ermöglicht diese Konstruktion einen einfachen Einbau, da sich der Beutel selbst zentriert.

Ein- und Ausbau werden ferner durch die integrierten Handgriffe 2 vereinfacht. Verbrauchte Beutel können einfach entsorgt werden, beispielsweise durch aschefreies Verbrennen.

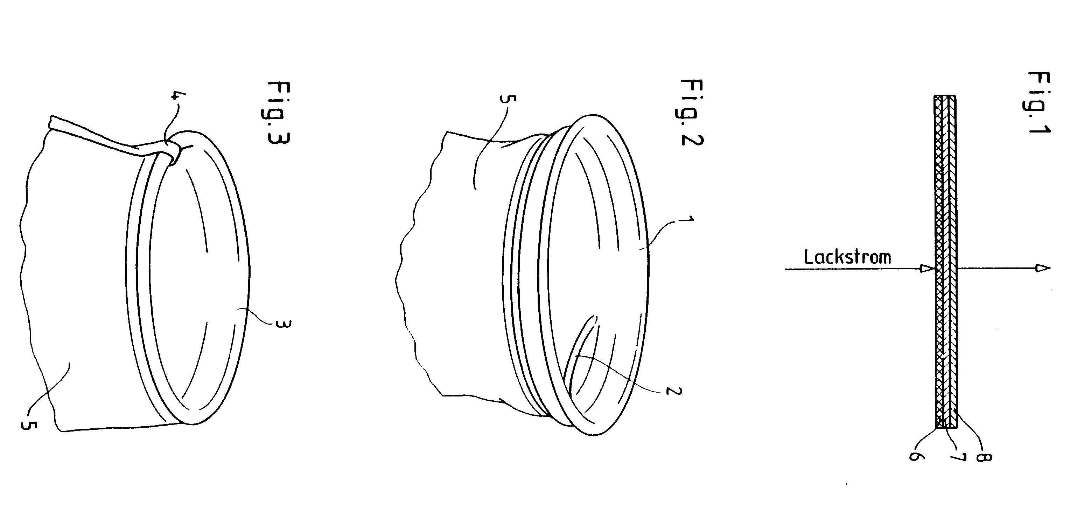

Gemäß Figur 3 können die Filterbeutel auch in konventioneller Ausführung mit Metallring hergestellt werden. Der bei dieser Ausführung entstandene Wulst 4 verlangt einen beachtlichen Anpressdruck damit die Gefahr eines "Bypass" möglichst gering gehalten wird.

Die erfindungsgemäßen Beutelfilter haben in ersten Versuchen überraschende, gegenüber dem Stand der Technik verbesserte Wirkungen ergeben. So konnte insbesondere das Problem der größtenteils bisher wirkungslosen Filterkartuschen bei der Beseitigung von kraterverursachenden Substanzen in Lacken endlich gelöst werden. Zudem ist entgegen dem bisherigen Stand der Technik ein Hintereinander- oder Parallelschalten mehrerer Filterkartuschen für Schmutz- und Kraterfiltration nicht mehr erforderlich.

Die insgesamt effektivere Nutzung der Filtermaterialien führt dazu, daß überraschend wenig Filtermaterial eingesetzt werden muß. Wo vorher etwa 36 Kartuschen notwendig waren, müssen überraschenderweise nur noch 2 Beutel verwendet werden. Dies bedingt zugleich eine erhebliche Kostenersparnis. Insbesondere der Zeit- und Kostenaufwand für die Reinigung und die Filtermaterialentsorgung sind erheblich geringer. Mit dem geringeren Filtereinsatz nehmen auch die Emissionen bei der Entsorgung des Filtermaterials ab.

Eine Entlastung der Umwelt bedeutet der Einsatz der erfindungsgemäßen Materialien auch deshalb, weil bei der Filtration von Wasserbasislacken überraschenderweise etwa 40 % weniger Produktentsorgung infolge von Kraterbildung erforderlich sind, als dies nach dem bisherigen Stand der Technik der Fall war.

## Patentansprüche

1. Material zur Filtration von Lacken, insbesondere von Wasserbasislacken, das aus mindestens zwei Schichten mit unterschiedlicher Filterselektivität zusammengesetzt ist, wobei eine in Flußrichtung des Filtrates gesehen erste Schicht aus Polypropylen und eine in Flußrichtung des Filtrates gesehen zweite Schicht aus Polypropylen vorhanden sind, wobei die erste Schicht eine Nadelfilz- und die zweite Schicht eine Mikrofaser-Struktur hat und die Filterfeinheiten (Porengröße) der ersten Schicht und der zweiten Schicht im Verhältnis von 10:1 bis 5:1 zueinander stehen, und wobei die Filterfeinheit der ersten Schicht bis zu 100 um beträgt.

2. Material nach Anspruch 1,
**dadurch gekennzeichnet,**
daß die Filterfeinheit der ersten Schicht zwischen 1 und 5 µm liegt.

3. Material nach Anspruch 1,
**dadurch gekennzeichnet,**
daß die Filterfeinheit der zweiten Schicht zwischen 1 und 2µm liegt.

4. Material nach einem der Ansprüche 1 bis 3,
**dadurch gekennzeichnet**,
daß es mit einer dritten Schicht versehen ist, die als Stützgewebe dient, und die vorzugsweise aus monofilem Nylon-Gewebe besteht.

## Claims

1. Material for filtering coatings, in particular waterborne coatings, which material is composed of at least two layers having different filter selectivities, wherein a first layer, as seen in the direction of flow of the filtrate, of polypropylene and a second layer, as seen in the direction of flow of the filtrate, of polypropylene are present, the first layer having a needlefelt structure and the second layer having a microfibre structure and the filter finenesses (pore size) of the first layer and the second layer being in a ratio of 10:1 to 5:1 to one another, and wherein the filter fineness of the first layer is up to 100 µm.

2. Material according to Claim 1, characterized in that the filter fineness of the first layer is between 1 and 5 µm.

3. Material according to Claim 1, characterized in that the filter fineness of the second layer is between 1 and 2 µm.

4. Material according to one of Claims 1 to 3, characterized in that it is furnished with a third layer which serves as support fabric and which is preferably composed of monofilament nylon woven fabric.

## Revendications

1. Matériau pour la filtration de laques, en particulier de laques à base d'eau, qui est composé d'au moins deux couches à sélectivité de filtre différente, une première couche en polypropylène, vue dans la direction d'écoulement du filtrat et une deuxième couche en polypropylène, vue dans la direction d'écoulement du filtrat, étant présentes, la première couche ayant une structure de feutre aiguilleté et la deuxième couche ayant une structure à microfibres, et les finesses des filtres (tailles de pores) de la première couche et de la deuxième couche étant dans le rapport de 10:1 à 5:1 les uns par rapport aux autres, et la finesse de filtre de la première couche allant jusqu'à 100 microns.

2. Matériau selon la revendication 1, caractérisé en ce que la finesse de filtre de la première couche se situe entre 1 et 5 microns.

3. Matériau selon la revendication 1, caractérisé en ce que la finesse de filtre de la deuxième couche se situe entre 1 et 2 microns.

4. Matériau selon l'une quelconque des revendications 1 à 3, caractérisé en ce qu'il est pourvu d'une troisième couche, qui sert de tissu de support et qui se compose de préférence d'un tissu en nylon monofil.
